# EUROPÄISCHE PATENTSCHRIFT

(11) **EP 1 523 412 B1**
(45) Veröffentlichungstag und Bekanntmachung des Hinweises auf die Patenterteilung: **07.05.2008**
(21) Anmeldenummer: 03765034.8
(22) Anmeldetag: 17.07.2003
(51) Int. Cl.: B41J 29/393, H04N 1/32, G03G 15/00, G06F 11/00, G06F 11/32

(54) **VERFAHREN UND VORRICHTUNG ZUR FEHLERBEHANDLUNG IN EINEM DRUCKER ODER KOPIERER**
METHOD AND DEVICE FOR HANDLING ERRORS IN A PRINTER OR COPIER
PROCEDE ET DISPOSITIF DE TRAITEMENT D'ERREURS D'UNE IMPRIMANTE OU D'UNE PHOTOCOPIEUSE

(30) Priorität: 18.07.2002 DE 10232631
(43) Veröffentlichungstag der Anmeldung: 20.04.2005
(73) Patentinhaber: Océ Printing Systems GmbH, 85586 Poing (DE)
(72) Erfinder: NEMMAIER, Christoph, 81547 München (DE); BREMMER, Peter, 85244 Röhrmoos (DE); DREXLER, Hubert, 84416 Taufkirchen (DE)
(74) Vertreter: Schaumburg, Thoenes, Thurn, Landskron
(86) Internationale Anmeldenummer: PCT/EP2003/007803
(87) Internationale Veröffentlichungsnummer: WO 2004/009363

(56) Entgegenhaltungen:
- US-B1- 6 185 379

## Beschreibung

Die Erfindung betrifft ein Verfahren und eine Vorrichtung zur Fehlerbehandlung in einem Drucker oder Kopierer. Auftretende Fehlerzustände werden einer Steuerung übermittelt.

Bei modular aufgebauten Druck- und Kopiersystemen sind oft mehrere Module von auftretenden Fehlern betroffen. Jedes dieser Module generiert dann unabhängig von den anderen Modulen eine Fehlermeldung und überträgt diese einer zentralen Steuerung des Druck- oder Kopiersystems. Ist das Druck- oder Kopiersystem mit einem zentralen Hostsystem, z.B. einem Print-Spooler, verbunden, werden diese Fehlermeldungen sowohl an das Hostsystem als auch am Druck- oder Kopiersystem selbst, z.B. an einer Anzeigeeinheit des Druck- oder Kopiersystems, ausgegeben. Dadurch werden Mehrfachmeldungen an das Hostsystem und an einem Bedienfeld oder einer Bedienkonsole des Druck- oder Kopiersystems ausgegeben, die das Auffinden des ursächlichen Fehlers z.B. für eine Bedienperson aufgrund der Vielzahl und Unübersichtlichkeit der Fehlermeldungen erschweren. Das Hostsystem kann z.B. auch auf mehrere dieser Fehlermeldungen reagieren, wodurch weitere Probleme entstehen können, wie z.B. ein mehrmaliges Fortsetzen des abgebrochenen Druck- oder Kopierauftrages, wodurch noch zu druckende Druckbilder doppelt erzeugt werden. Auch ein Fehlerprotokoll, das üblicherweise im Hostsystem und im Druck- oder Kopiersystem z.B. als Log-Datei geführt wird, enthält im Allgemeinen all diese Fehlermeldungen, wodurch die Auswertung dieser Log-Datei nach einer Aufzeichnung über einen längeren Zeitraum nahezu unmöglich ist. Auch erschwert die Vielzahl dieser Fehlermeldungen eine Reaktion zur automatischen Fehlerbehebung durch das Druck- oder Kopiersystem.

Bei bekannten Druck- und Kopiersystemen wurden Meldungen von auftretenden Fehler direkt über eine Bedienkonsole ausgegeben und gleichzeitig an ein Hostsystem übertragen. Die Bewertung der Fehler wurde im Allgemeinen dem Bedienpersonal überlassen.

Die einzelnen Module setzen Fehlermeldungen in der zeitlichen Reihenfolge des Erkennens ab. Somit ist für eine Bedienperson nur schwer zu unterscheiden, welche Fehler ursächlich und welche Folgefehler sind. So wird z.B. ein Papierstau eines Einzelblatts im Druck- oder Kopiersystem erst erkannt, wenn z.B. ein Einzelblatt eine Lichtschranke nicht erreicht. Je nach Lichtschrankenabstand und Papiergeschwindigkeit vergehen bis zum Erkennen des Fehlers zum Teil mehrere Sekunden. Folgefehler, z.B. im Bereich des Druckwerks treten mitunter ein, bevor die Lichtschranke den Papierstau bemerkt. Dadurch wird der Folgefehler im Bereich des Druckwerks vor dem Fehler des Papierstaus gemeldet.

Wird eine Fehlermeldung an das Hostsystem übertragen, ist ein Eingriff der Bedienperson sowohl am Hostsystem als auch am Druck- oder Kopiersystem notwendig, um den Druck- oder Kopierprozess fortzusetzen. Dies ist auch erforderlich, wenn der Fehlerzustand nicht mehr besteht oder das Druck- oder Kopiersystem den Fehlerzustand selbst behoben hat und nur eine Bestätigungshandlung der Bedienperson am Hostsystem und am Druck- oder Kopiersystem notwendig ist.

Aus der Patentschrift US 6,185,379 B1 der Anmelderin ist ein Verfahren zum Betreiben eines Hochleistungsdruckers mit Hilfestellung bei Fehlerzuständen bekannt. Die von Überwachungseinheiten erfassten Fehlerzustände werden mindestens in zwei Fehlerklassen eingeteilt. Der Zugang zu speziellen Informationen zumindest bei Fehlerzuständen der zweiten Fehlerklasse erfolgt über eine Zugangsberechtigungsprozedur. Dadurch wird sowohl dem Bedienpersonal Hilfestellung bei der Behebung von einfachen Fehlern als auch qualifizierten Technikern Hilfestellung bei der Beseitigung von schwerwiegenden bzw. kompliziert zu behebenden Fehlerursachen gegeben. Eine Hilfestellung beim Ermitteln der Fehlerursache, wenn mehrere Überwachungseinheiten nacheinander Fehlerzustände ermitteln, ist jedoch aus der US 6,185, 379 B1 nicht bekannt.

Aus dem Dokument DE 691 25 677 T2 sind ein Verfahren und eine Vorrichtung zum Beseitigen von Fehlern in einem elektronischen Reprografie-System bekannt. Mindestens ein Fehler wird während des normalen Betriebsmodus erfasst. Anschließend wird dieser Fehler in mindestens eine Fehlergruppe gruppiert, wobei der Fehlergruppe ein Satz besonderer Beseitigungs- und Wiederherstellungsinstruktionen zugeordnet ist.

Aus dem Dokument US 6,185,379 B1 ist ein Verfahren zur Fehlerbehandlung bei einem Drucker oder Kopierer bekannt. Bei einem aufgetretenen Fehler wird überprüft, ob dieser durch eine Bedienperson sofort zu beseitigen ist oder ob zum Beseitigen des Fehlers ein spezialisierter Techniker erforderlich ist.

Aufgabe der Erfindung ist es, ein Verfahren und eine Vorrichtung zur Fehlerbehandlung in einem Drucker oder Kopierer anzugeben, bei dem bzw. bei der eine einfache Fehlerbehandlung in einem Drucker oder Kopierer möglich ist und notwendige Eingriffe des Bedienpersonals reduziert sind.

Diese Aufgabe wird für ein Verfahren zur Fehlerbehandlung in einem Drucker oder Kopierer mit den Merkmalen des Patentanspruchs 1 gelöst. Vorteilhafte Weiterbildungen sind in den abhängigen Patentansprüchen angegeben.

Auftretende Fehlerzustände werden einer Steuerung übermittelt. Mehrere nacheinander übermittelte Fehlerzustände werden in einem Speicher gespeichert. Die gespeicherten Fehlerzustände werden von der Steuerung bewertet, wobei die Steuerung die gespeicherten Fehlerzustände mit vorgegebenen Fehlermustern vergleicht. Dabei ermittelt die Steuerung zumindest eine Fehlerart. Abhängig von der Fehlerart werden durch die Steuerung weitere Schritte ausgeführt.

Dadurch wird erreicht, dass die aufgetretenen Fehlerzustände bewertet werden können und nur für die Fehlerursache relevante Fehlermeldungen abhängig von der ermittelten Fehlerart ausgegeben werden. Dadurch muss eine Bedienperson nicht mehr die Fehlerursache aus einer Vielzahl von angezeigten Fehlermeldungen ermitteln. Durch das Ermitteln von zumindest der Fehlerart kann die Steuerung weitere Schritte automatisch einleiten, wie z.B. das Übermitteln einer Fehlermeldung an ein übergeordnetes Hostsystem oder das automatische Fortsetzen des Druckprozesses nach automatischer Beseitigung der Fehlerursache. Insbesondere mit Hilfe voreingestellter Fehlermuster kann eine exakte Bewertung der Fehlerursache durch die Steuerung erfolgen. Dadurch können Fehlerursachen einfach ermittelt werden, durch die Fehlerzustände z.B. in mehreren Modulen des Druckers oder Kopierers auftreten. Die aufgetretenen Fehlerzustände werden der Steuerung mitgeteilt, die daraus, wie bereits beschrieben, einfach die Fehlerart ermittelt, vorzugsweise die Fehlerursache.

Gemäß einem zweiten Aspekt der Erfindung ist eine Vorrichtung zur Fehlerbehebung in einem Drucker oder Kopierer angegeben. Diese Vorrichtung hat eine Steuerung. Der Steuerung werden die im Drucker oder Kopierer auftretenden Fehlerzustände übermittelt. Weiterhin hat die Vorrichtung einen Speicher, in dem mehrere nacheinander übermittelte Fehlerzustände speicherbar sind. Die Steuerung vergleicht die gespeicherten Fehlerzustände mit vorgegebenen Fehlermustern und ermittelt zumindest eine Fehlerart. Abhängig von der Fehlerart führt die Steuerung weitere Maßnahmen durch.

Dadurch wird erreicht, dass die Fehlerursache insbesondere durch den Vergleich mit den Fehlermustern einfach und schnell ermittelt wird, ohne dass Eingriffe einer Bedienperson notwendig sind. Der Bedienperson wird nur eine Fehlermeldung auf einer Anzeigeeinheit ausgegeben, die die Bedienperson über die Fehlerursache informiert. Die Bedienperson muss somit im Unterschied zum Stand der Technik nicht mehr mühsam aus einer Vielzahl von Fehlermeldungen, die durch Fehlerzustände im Zusammenhang mit dem ursächlichen Fehler übermittelt worden sind, die relevante Fehlermeldung über die Fehlerart selbst ermitteln. Durch eine Bewertung der Fehlerzustände mit Hilfe der Steuerung kann weiterhin erreicht werden, dass der Druckprozess automatisch wieder gestartet wird oder eine Fehlermeldung zu einer übergeordneten Steuerung, wie z.B. ein Hostsystem, übertragen wird. Durch die Ausgabe der Fehlerart wird die Bedienperson präzise über die Fehlerursache informiert, wodurch die Bedienperson die Fehlerursache gezielt beseitigen kann, wenn ein automatisches Wiederinbetriebnehmen des Druckers oder Kopierers durch automatisches Beseitigen eines Fehlers und durch automatisches Fortsetzen des durch den Fehler abgebrochenen Druckauftrages. Dieses Fortsetzen wird auch als Wiederaufsetzen oder Neuaufsetzen des Druckauftrages bezeichnet.

Zum besseren Verständnis der vorliegenden Erfindung wird im Folgenden auf das in den Zeichnungen dargestellte bevorzugte Ausführungsbeispiel Bezug genommen, das an Hand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und dem Verfahren sowie derartige weitere Anwendungen der Erfindung, wie sie darin aufgezeigt sind, als übliches derzeitiges oder künftiges Fachwissen eines zuständigen Fachmanns angesehen werden.

Die Figuren zeigen ein Ausführungsbeispiel der Erfindung, nämlich:
- Figur 1: ein Blockschaltbild eines Systems zur Fehlerbehandlung in einem Drucker oder Kopierer; und

- Figur 2: den zeitlichen Ablauf eintreffender Fehlermeldungen nach einem Fehler.

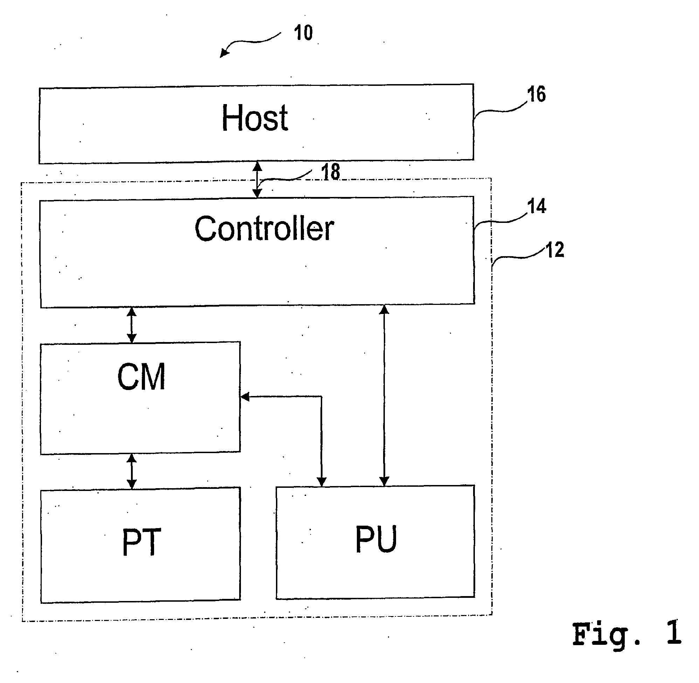

In Figur 1 ist ein Blockschaltbild eines Systems 10 zur Fehlerbehandlung in einem Drucker 12 dargestellt. Der Drucker 12 enthält eine Steuerung 14, die z.B. über ein lokales Netzwerk 18 (LAN-Local Area Network) mit einem Host-Computer 16 verbunden ist. Der Host-Computer 16 überträgt Druckdaten zur Steuerung 14 des Druckers 12. Die Steuerung 14 überträgt Statusmeldungen und Fehlermeldungen zum Host-Computer 16. Der Host-Computer 16 bereitet Druckaufträge auf und steuert die Reihenfolge der abzuarbeitenden Druckaufträge. Ferner steuert der Host-Computer 16 ein Fortsetzen eines Druckauftrages nach einem Fehler von einem zu bestimmenden Startpunkt innerhalb des Druckauftrages an, nachdem der Drucker 12 die Seitenzahl der zuletzt fehlerfrei gedruckten Seite zum Host-Computer überträgt. Alternativ kann der Betrag der vom aktuellen Druckauftrag bis zum Auftreten des Fehlers korrekt verarbeiteten Datenmenge an den Host-Computer 16 übertragen werden. Somit erfolgt allgemein ein Abgleich des Abarbeitungsstatus zwischen der Steuerung 14 des Druckers 12 und dem Host-Computer 16. Der Host-Computer 16 überträgt dann die Druckdaten zum Drucken der noch nicht gedruckten Seiten nochmals zum Drucker 12.

Die Steuerung 14 bereitet die vom Host-Computer 16 übermittelten Druckdaten auf und erzeugt aus diesen Druckdaten z.B. Rasterbilder der zu druckenden Druckbilder. Der Drucker 12 enthält weiterhin ein Koordinationsmodul CM, eine Papierlaufsteuerung PT (Paper Trace) und eine Bildaufzeichnungseinheit PU (Picture Unit).

Das Koordinationsmodul CM meldet bei der Papierlaufsteuerung PT zu bedruckende Einzelblätter an und koordiniert ferner den Ablauf des Transports des Einzelblattes im Drucker 12 mit der. Bildaufzeichnung auf dem Einzelblatt zwischen der Papierlaufsteuerung PT, der Bildaufzeichnungseinheit PU und der Steuerung 14. Die Papierlaufsteuerung PT und die Bildaufzeichnungseinheit PU übermitteln dem Kommunikationsmodul CM Fehlermeldungen. Das Koordinationsmodul CM sammelt die übermittelten Fehlermeldungen und führt eine Bewertung dieser Fehlermeldungen durch. Weiterhin übermitteln weitere nicht dargestellte Überwachungseinheiten Fehlermeldungen bei auftretenden Fehlern. Diese Überwachungseinheiten sind in einer Vielzahl von Gerätekomponenten (nicht dargestellt) enthalten, wie z.B. einer Papiereingabeeinheit, einer Papierausgabeeinheit, einer Stapeleinheit etc. Der Signal- und Datenaustausch zwischen den einzelnen Steuerungsmodulen 14, CM und den einzelnen Geräteeinheiten PT, PU des Druckers 12 erfolgt vorzugsweise mit Hilfe eines Bussystems.

Die Papierlaufsteuerung PT steuert den Transport der Einzelblätter durch den Drucker 12 und erzeugt Meldungen an das Koordinationsmodul CM über die korrekte Ablage der Einzelblätter in einem Ablagefach oder einer Stapeleinheit. Weiterhin erzeugt die Papierlaufsteuerung PT bei einem auftretenden Papierlauffehler eine oder mehrere detaillierte Fehlermeldungen, die an das Koordinationsmodul CM übertragen werden. Die Bildaufzeichnungseinheit PU ist über das Bussystem mit der Steuerung 14 verbunden, wobei die Bildaufzeichnungseinheit PU Pixeldaten von der Steuerung 14 anfordert, woraufhin die Steuerung 14 diese Pixeldaten zum Erzeugen des Druckbildes zur Bildaufzeichnungseinheit PU überträgt. Ferner erzeugt die Bildaufzeichnungseinheit PU aus diesen Pixeldaten ein Druckbild und druckt dieses auf die zu bedruckende Seite eines Einzelblatts um.

Das Koordinationsmodul CM überträgt zur Bildaufzeichnungseinheit PU Positionsinformationen von den zu bedruckenden Einzelblättern. Das Koordinationsmodul CM meldet zu bedruckende Einzelblätter bei der Bildaufzeichnungseinheit PU an. Neben Fehlerzuständen der Druckeinheit ermittelt die Bildaufzeichnungseinheit PU weiterhin Zuordnungsfehler, die auftreten, wenn das aus den aktuell vorhandenen Pixeldaten zu erzeugende Druckbild auf einer anderen als der der Druckeinheit zugeführten Seite erzeugt werden soll. Die Bildaufzeichnungseinheit PU überträgt eine Blattinformation des zu bedruckenden bzw. des bedruckten Einzelblattes an das Koordinationsmodul CM sowie auftretende Fehlermeldungen. Das Koordinationsmodul CM überträgt zur Bildaufzeichnungseinheit PU weiterhin eine Positionsinformation des zu bedruckenden Einzelblattes, die das Koordinationsmodul CM zuvor von der Papierlaufsteuerung PT erhalten hat.

Die Steuerung 14 enthält weiterhin Zähler, wie Einzelblattzähler, Betriebsstundenzähler sowie seiten- und zeitabhängige Verschleißzähler. In der Steuerung 14 ist auch ein Fehlerspeicher enthalten, in dem Fehlerzustände und Betriebszustände in der zeitlichen Reihenfolge ihres Auftretens gespeichert und protokolliert werden.

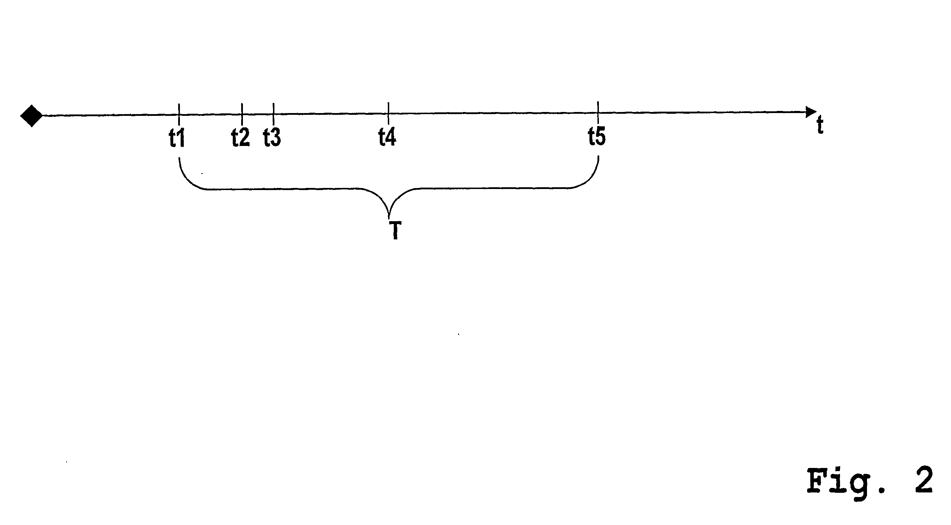

In Figur 2 sind die dem Koordinationsmodul CM übermittelten Fehlermeldungen einzelner Überwachungseinheiten, wie z.B. der Papierlaufsteuerung PT nach dem Auftreten eines Fehlers in ihrer zeitlichen Reihenfolge dargestellt. Zum Zeitpunkt t1 tritt ein Papierlauffehler, wie z.B. ein Papierstau, im Drucker 12 auf. Nachfolgend zum Zeitpunkt t2 tritt ein Bildaufzeichnungsfehler auf, da das den Papierstau verursachende Einzelblatt nicht zu einem vorbestimmten Zeitpunkt am Druckwerk eintrifft.

Die Bildaufzeichnungseinheit PU erkennt den Aufzeichnungsfehler und überträgt eine Fehlermeldung zum Kommunikationsmodul CM zum Zeitpunkt t3. Die Papierlaufsteuerung PT erkennt den Papierlauffehler erst dann, wenn das Einzelblatt eine Lichtschranke nach dem Druckwerk nicht zu einem vorbestimmten Zeitpunkt erreicht. Dies wird von der Papierlaufsteuerung PT zum Zeitpunkt t4 erkannt, nachdem das Einzelblatt diese Lichtschranke nicht rechtzeitig erreicht hat. Eine entsprechende Fehlermeldung wird von der Papierlaufsteuerung PT zum Kommunikationsmodul CM übertragen. Das Koordinationsmodul CM bewertet die Fehler und ermittelt zumindest eine Fehlerart.

Vorzugsweise ermittelt das Kommunikationsmodul CM dabei den ursächlichen Fehler und führt abhängig von der Fehlerart weitere Schritte aus. Beim Ausführungsbeispiel nach Figur 2 wird der Druckprozess unterbrochen und der Drucker 12 angehalten. Im Drucker 12 vorhandene unbeschädigte korrekt bedruckte Blätter, die den Fehlerort zum Zeitpunkt des Auftretens des Fehlers bereits passiert hatten, werden noch vor dem Stillstand des Druckers 12 ausgegeben.

Zum Zeitpunkt t5 sind alle noch im Drucker 12 vorhandenen unbeschädigten Einzelblätter ausgegeben und der Druckvorgang ist unterbrochen. Zu diesem Zeitpunkt t5 sind auch alle im Zusammenhang mit dem Fehler von den Überwachungseinheiten (PU, PT) des Druckers 12 ermittelten Fehlerzustände an das Koordinationsmodul CM übermittelt und gespeichert. Der Zeitraum zwischen dem auftreten des ersten Fehlers zum Zeitpunkt t1 bis zum Stillstand des Druckers 12 zum Zeitpunkt t5 ist in Figur 2 mit T angegeben. Die im Zeitraum T übermittelten Fehlerzustände werden von dem Kommunikationsmodul CM bewertet, wobei sie gespeichert und mit vorgegebenen Fehlermustern verglichen werden. Dabei wird vorzugsweise ein ursächlicher Fehler ermittelt. Die Fehlermuster enthalten einen oder mehrere Fehlerzustände, wobei bei mehreren Fehlerzuständen auch die Reihenfolge ihres Auftretens und/oder die Reihenfolge ihrer Meldung an die Steuerung 14 berücksichtigt wird.

Im vorliegenden Ausführungsbeispiel wird zum Zeitpunkt t3 ein Aufzeichnungsfehler und zum Zeitpunkt t4 ein Papierlauffehler an das Kommunikationsmodul CM gemeldet. Dieses Fehlermuster deutet darauf hin, dass der zuerst gemeldete Aufzeichnungsfehler ein Folgefehler des nachfolgend gemeldeten Papierlauffehlers ist. Das Kommunikationsmodul CM ermittelt somit den Papierlauffehler an Hand eines gespeicherten Fehlermusters als ursächlichen Fehler und meldet diesen an die Steuerung 14. Die Steuerung 14 veranlasst daraufhin die Fehlerbeseitigung, indem sie eine Routine zum Entfernen von Papierresten aus dem Papierweg startet und anschließend einen Selbsttest durchführt.

Ist der Selbsttest erfolgreich, wird der Drucker 12 automatisch wieder gestartet. Wird die Routine zum Entfernen von Papier aus dem Papierweg nicht ordnungsgemäß ausgeführt oder ist der Selbsttest nicht erfolgreich, so gibt die Steuerung 14 eine Fehlermeldung an den übergeordneten Host-Computer 16. Der Host-Computer 16 stoppt daraufhin die Druckaufträge für den Drucker 12. Ein Eingriff einer Bedienperson zur Wiederaufnahme des Betriebs des Druckers 12 und zum Fortsetzen eines unterbrochenen Druckauftrages mit der ersten nicht fehlerfrei gedruckten Seite des ursprünglichen Druckauftrages durch das Host-Computersystem 16 sind nur in diesem Fall notwendig. Bei der automatischen Wiederaufnahme des Betriebs nach einem automatischen Beseitigen des Papierlauffehlers durch den Drucker 12, erfolgt keine Fehlermeldung an das Hostsystem 16. Es erfolgt lediglich ein Eintrag des ursächlichen Fehlers, d.h. des Papierlauffehlers, in das Fehlerprotokoll des Druckers 12, sowie eine Anzeige einer Fehlermeldung auf einer Anzeigeeinheit des Druckers 12, durch die die Bedienperson über den aufgetretenen Fehler informiert wird.

Das automatische Beseitigen des Papierlauffehlers kann z.B. durch die Ausgabe eines beschädigten Einzelblatts erfolgen, das den Papierlauffehler verursacht hat. Andere Fehlerursachen können nach dem Stillstand des Druckers 12 automatisch wieder beseitigt werden oder bei Stillstand des Druckers 12 bereits beseitigt sein. Z.B. ein Fehler bei Tonermangel in der Entwicklerstation infolge eines hohen Tonerverbrauchs ist nach dem Nachfördern von Toner spätestens nach kurzer Stillstandszeit des Druckers 12 automatisch wieder behoben. Fehler in der Spannungsversorgung von Baugruppen, insbesondere durch Spannungsschwankungen in der Versorgungsspannung oder eine. Unterbrechung der Spannungsversorgung einzelner Baugruppen durch Überlastschalter, können nach einer kurzen Wartezeit ohne Bedienhandlungen zumindest so beseitigt sein, dass ein Weiterbetrieb des Druckers 12 möglich ist.

Bei einem anderen Ausführungsbeispiel wird beim Bewerten der Fehlerzustände eine Fehlergruppe ausgewählt, wobei abhängig von der ausgewählten Fehlergruppe, der ermittelten Fehlerart und/oder des ursächlichen Fehlers weitere Schritte festgelegt werden. So kann z.B. abhängig von der Fehlergruppe, wie in der Patentschrift US 6,185,379 B1 der Anmelderin, abhängig von der ermittelten Fehlerklasse Hilfestellung zum Beheben des aufgetretenen Fehlers, z.B. über Anzeige entsprechender Textmeldungen oder Videosequenzen auf der Anzeigeeinheit des Druckers 12, gegeben werden. Der Zugang zur speziellen Information bei Fehlerzuständen kann dabei über eine Zugangsberechtigungsprozedur erfolgen.

Bei anderen Ausführungsbeispielen wird beim Vergleich der gespeicherten Fehlerzustände mit den vorgegebenen Fehlermustern die Art und/oder die Reihenfolge der auftretenden Fehlerzustände berücksichtigt. Dadurch lässt sich der ursächliche Fehler sehr präzise bestimmen und gezielte Maßnahmen zur Fehlerbeseitigung können schnell durchgeführt werden. Bei anderen Ausführungsformen der Erfindung werden nach einem Fehlerzustand die Druckaufträge an der Stelle fortgesetzt, an der der Fehler aufgetreten ist, wodurch der aktuelle abzuarbeitenden Druckauftrag lückenlos und ohne Überschneidung fortgesetzt wird. Der Druckauftrag wird also mit dem Blatt fortgesetzt, das im Druckauftrag nach dem zuletzt vor dem Auftreten des Fehlers fehlerfrei gedruckten Blatts folgt.

Vorzugsweise ist der Drucker 12 ein Hochleistungsdrucker mit einer Druckgeschwindigkeit von größer gleich 50 Blatt A4 pro Minute. Durch den relativ komplizierten Aufbau eines solchen Hochleistungsdruckers 12 ist eine erfindungsgemäße Fehlerbehandlung besonders vorteilhaft und zweckmäßig.

Obgleich in den Zeichnungen und in der vorhergehenden Beschreibung ein bevorzugtes Ausführungsbeispiel gezeigt und detailliert beschrieben ist, sollte dies als rein beispielhaft und die Erfindung nicht einschränkend angesehen werden. Es wird darauf hingewiesen, dass nur das bevorzugte Ausführungsbeispiel dargestellt und beschrieben ist.

### Bezugszeichenliste

- 10: System zur Fehlerbehandlung
- 12: Drucker
- 14: Steuerung
- 16: Host-Computer
- 18: LAN
- CM: Koordinationsmodul
- PT: Papierlaufsteuerung
- PU: Bildaufzeichnung
- t1 bis t5: Zeitpunkte von Ereignissen
- T: Zeit vom Auftreten des Fehlers bis zum Stillstand des Druckers

## Patentansprüche

1. Verfahren zur Fehlerbehandlung in einem Drucker oder Kopierer,
bei dem eine Vielzahl von Überwachungseinheiten (PT, PU) Fehlerzustände des Druckers (12) oder Kopierers erfassen,
die erfassten Fehlerzustände einer Steuerung (CM) übermittelt werden,
mehrere nacheinander übermittelte Fehlerzustände in einem Speicher gespeichert werden,
die gespeicherten Fehlerzustände von der Steuerung (CM) bewertet werden,
**dadurch gekennzeichnet, daß** die gespeicherten Fehlerzustände mit vorgegebenen Fehlermustern verglichen werden und zumindest eine Fehlerart ermittelt wird,
und daß durch die Steuerung (CM) abhängig von der Fehlerart weitere Schritte ausgeführt werden.

2. Verfahren nach Anspruch 1, **dadurch gekennzeichnet, dass** beim Bewerten der Fehlerzustände ein ursächlicher Fehler ermittelt wird.

3. Verfahren nach einem der vorhergehenden Ansprüche, **dadurch gekennzeichnet, dass** beim Bewerten der Fehlerzustände eine Fehlergruppe ausgewählt wird, wobei abhängig von der ausgewählten Fehlergruppe die weiteren Schritte festgelegt werden.

4. Verfahren nach einem der vorhergehenden Ansprüche, **dadurch gekennzeichnet, dass** beim Vergleich der gespeicherten Fehlerzustände mit den Fehlermustern die Art und/oder die Reihenfolge der auftretenden Fehlerzustände berücksichtigt wird.

5. Verfahren nach einem der vorhergehenden Ansprüche, **dadurch gekennzeichnet, dass** die Steuerung (CM) eine automatische Fehlerbehebung durchführt und/oder eine Fehlermeldung an eine übergeordnete Steuerung (14, 16) meldet.

6. Verfahren nach Anspruch 5, **dadurch gekennzeichnet, dass** die Steuerung (CM) mit einem Hostsystem (16) verbunden ist, wobei die Steuerung (CM) nur das Auftreten von Fehlern an das Hostsystem (16) meldet, die nicht automatisch behoben werden können.

7. Verfahren nach Anspruch 5 oder 6, **dadurch gekennzeichnet, dass** Informationen über die Fehlerart von Fehlerzuständen, die automatisch behoben werden konnten, zumindest in einem Fehlerspeicher der Steuerung (CM, 14) gespeichert werden.

8. Verfahren nach einem der vorhergehenden Ansprüche, **dadurch gekennzeichnet, dass** die bis zum Stillstand des Druckers (12) oder Kopierers übermittelten Fehlerzustände mit Hilfe eines vorgegebenen Fehlerbewertungsalgorithmus bewertet werden, wobei mindestens eine Fehlerart ermittelt wird.

9. Verfahren nach einem der vorhergehenden Ansprüche, **dadurch gekennzeichnet, dass** der Drucker (12) oder Kopierer abhängig von der Fehlerart und/oder eines übermittelten Fehlerzustands automatisch wieder gestartet bzw. ein automatischer Start verhindert wird und/oder eine Signalisierung des Fehlers an die übergeordnete Steuerung (14, 16) erfolgt.

10. Verfahren nach einem der vorhergehenden Ansprüche, **dadurch gekennzeichnet, dass** nach dem Übermitteln eines Fehlerzustands der Druck- bzw. Kopiervorgang beendet wird, und dass alle bis zum Stillstand des Druckers (12) oder Kopierers übermittelten Fehlerzustände im Speicher gespeichert und zur Bewertung herangezogen werden.

11. Verfahren nach einem der vorhergehenden Ansprüche, **dadurch gekennzeichnet, dass** nach dem Bewerten der Fehlerzustände die gespeicherten Fehlerzustände im Speicher gelöscht werden.

12. Vorrichtung zur Fehlerbehandlung in einem Drucker oder Kopierer,
mit einer Steuerung (CM), der im Drucker (12) oder Kopierer auftretende Fehlerzustände übermittelt werden können,
mit einem Speicher, in dem mehrere nacheinander übermittelte Fehlerzustände speicherbar sind, **dadurch**
**gekennzeichnet, daß**
die Steuerung (CM) geeignet ist, um die gespeicherten Fehlerzustände mit vorgegebenen Fehlermustern zu vergleichen, zumindest eine Fehlerart zu ermitteln,
und (CM) abhängig von der Fehlerart weitere Maßnahmen durchzuführen.

## Claims

1. Method for error handling in a printer or copier,
in which a plurality of monitoring units (PT, PU) detect error states of the printer (12) or copier,
the detected error states are transmitted to a controller (CM),
a plurality of successively transmitted error states are stored in a storage,
the stored error states are evaluated by the controller (CM),
**characterized in that** the stored error states are compared with predetermined error patterns and at least one error type is determined,
and **in that** further steps are executed by the controller (CM) dependent on the error type.

2. Method according to claim 1, **characterized in that** a causative error is determined upon evaluation of the error states.

3. Method according to any of the preceding claims, **characterized in that** an error group is selected upon evaluation of the error states, the further steps being established dependent on the selected error group.

4. Method according to any of the preceding claims, **characterized in that** the type and/or the sequence of the occurred error states is considered upon comparison of the stored error states with the error patterns.

5. Method according to any of the preceding claims, **characterized in that** the controller (CM) implements an automatic error correction and/or sends an error notification to a superordinate controller (14, 16).

6. Method according to claim 5, **characterized in that** the controller (CM) is connected with a host system (16), wherein the controller (CM) only registers with the host system (16) the occurrence of errors that cannot be corrected automatically.

7. Method according to claim 5 or 6, **characterized in that** information about the error type of error states that could be automatically remedied are stored at least in an error storage of the controller (CM, 14).

8. Method according to any of the preceding claims, **characterized in that** the error states transmitted up to the shutdown of the printer (12) or copier are evaluated with the aid of a predetermined error evaluation algorithm, at least one error type being determined.

9. Method according to any of the preceding claims, **characterized in that**, dependent on the error type and/or a transmitted error state, the printer (12) or copier is automatically restarted or, respectively, an automatic start is prevented and/or a signalling of the error to the superordinate controller (14, 16) takes place.

10. Method according to any of the preceding claims, **characterized in that** the printing or, respectively, copying event is ended after the transmission of an error state, and that all error states transmitted up to the shutdown of the printer (12) or copier are stored in the storage and used for evaluation.

11. Method according to any of the preceding claims, **characterized in that** the stored error states are erased in the storage after the evaluation of the error states.

12. Device for error handling in a printer or copier,
with a controller (CM) to which error states occurring in the printer (12) or copier can be transmitted,
with a storage in which a plurality of successively transmitted error states can be stored,
**characterized in that** the controller (CM) is adapted to compare the stored error states with predetermined error patterns, to determine at least one error type,
and to implement implements further measures dependent on the error type.

## Revendications

1. Procédé de traitement de défauts dans un appareil d'impression ou un copieur, dans lequel
un grand nombre d'unité de surveillance (PT, PU) détectent des états défectueux de l'appareil d'impression (12) ou du copieur,
les états défectueux détectés sont transmis à une commande (CM),
plusieurs états défectueux transmis successivement sont mémorisés dans une mémoire,
les états défectueux mémorisés sont évalués par la commande (CM),
**caractérisé en ce que**
les états défectueux mémorisés sont comparés à des modèles de défauts prescrits, et au moins un type de défaut est déterminé,
et des étapes ultérieures sont exécutées par la commande (CM) en fonction du type de défaut.

2. Procédé selon la revendication 1, **caractérisé en ce que** la cause du défaut est déterminée lors de l'évaluation des états défectueux.

3. Procédé selon l'une des revendications précédentes, **caractérisé en ce qu'**un groupe de défauts est choisi lors de l'évaluation des états défectueux, les étapes ultérieures étant déterminées en fonction du groupe de défauts choisi.

4. Procédé selon l'une des revendications précédentes, **caractérisé en ce que** le type et/ou l'ordre des états défectueux qui surviennent sont pris en compte lors de la comparaison des états défectueux mémorisés avec les modèles de défauts.

5. Procédé selon l'une des revendications précédentes, **caractérisé en ce que** la commande (CM) effectue une suppression automatique des défauts et/ou un message d'erreur est envoyé à une commande (14, 16) hiérarchiquement supérieure.

6. Procédé selon la revendication 5, **caractérisé en ce que** la commande (CM) est reliée à un système hôte (16), la commande (CM) ne signalant au système hôte (16) que la survenance de défauts qui ne peuvent pas être supprimés automatiquement.

7. Procédé selon la revendication 5 ou 6, **caractérisé en ce que** des informations sur le type d'états défectueux, qui n'ont pas pu être supprimés automatiquement, sont mémorisées au moins dans une mémoire de défauts de la commande (CM, 14).

8. Procédé selon l'une des revendications précédentes, **caractérisé en ce que** les états défectueux, transmis en vue d'arrêter l'appareil d'impression (12) ou le copieur, sont évalués à l'aide d'un algorithme prescrit d'évaluation de défauts, évaluation pendant laquelle on détermine au moins un type de défauts.

9. Procédé selon l'une des revendications précédentes, **caractérisé en ce que**, en fonction du type de défaut et/ou d'un état défectueux transmis, on redémarre automatiquement l'appareil d'impression (12) ou le copieur, ou bien on empêche le démarrage automatique et/ou on signale le défaut à la commande (14, 16) hiérarchiquement supérieure.

10. Procédé selon l'une des revendications précédentes, **caractérisé en ce que** le processus d'impression ou de copie est terminé après avoir transmis un état défectueux, et **en ce que** tous les états défectueux, transmis jusqu'à l'arrêt de l'appareil d'impression (12) ou du copieur, sont mémorisés dans la mémoire et sont utilisés pour l'évaluation.

11. Procédé selon l'une des revendications précédentes, **caractérisé en ce que** les états défectueux mémorisés dans la mémoire sont effacés après avoir évalué les états défectueux.

12. Dispositif de traitement de défauts dans un appareil d'impression ou un copieur, ledit dispositif comportant
une commande (CM) à laquelle peuvent être transmis des états défectueux survenant dans l'appareil d'impression (12) ou le copieur,
une mémoire dans laquelle peuvent être mémorisés plusieurs états défectueux transmis successivement,
**caractérisé en ce que**
la commande (CM) est apte à comparer les états défectueux mémorisés à des modèles de défauts prescrits, à déterminer au moins un type de défaut, et à prendre des mesures ultérieures en fonction du type de défaut.
